# EUROPEAN PATENT APPLICATION

(11) **EP 1 670 278 A1**
(43) Date of publication of application: **14.06.2006**
(21) Application number: 05090332.7
(22) Date of filing: 07.12.2005
(51) Int. Cl.: H04Q 7/38

(54) **Radio-wave state monitoring method and device thereof, cell reselection method employing radio-wave state monitoring method and device thereof as well as mobile wireless communication device**

(30) Priority: 07.12.2004 JP 2004353912
(71) Applicant: NEC CORPORATION, Minato-ku, Tokyo 108-8001 (JP)
(72) Inventor: Ishihara, Takeshi, c/o NEC Access Technica, Ltd., Kakegawa-shi, Shizuoka (JP)
(74) Representative: Wenzel & Kalkoff

(57) **Abstract**

A wireless terminal performs cell search with a periodicity determined based upon the transition probability calculated with reference to the cell reselection history prior to cell reselection. An undetected cell, which exhibits sufficient electric field strength in the cell search, is added to monitored cells. Furthermore, the wireless terminal performs cell measurement with a periodicity determined based upon the transition probability calculated with reference to the cell reselection history in the same way. The wireless terminal omits a monitored cell, which exhibits insufficient electric field strength in the cell measurement, from the monitored cell list. This reduces the number of instances of the cell search and the number of instances of the cell measurement, thereby reducing power consumption in the wireless terminal.

## Description

### BACKGROUND OF THE INVENTION

The present invention relates to a radio-wave state monitoring method and a device thereof, a cell-reselection method employing the radio-wave state monitoring method and a device thereof, and a mobile wireless device. Specifically, the present invention relates to a radio-wave state monitoring method in which monitoring of the radio-wave state is performed based upon the past cell reselection history and a device thereof, a cell reselection method employing the radio-wave monitoring method and a device thereof, and a mobile wireless device.

A mobile wireless system has a function of switching from a certain base station to an adjacent base station according to movement of a mobile wireless terminal device which is increasing in distance from its current base station as well as approaching an adjacent base station. Such a function is well known as "handover".

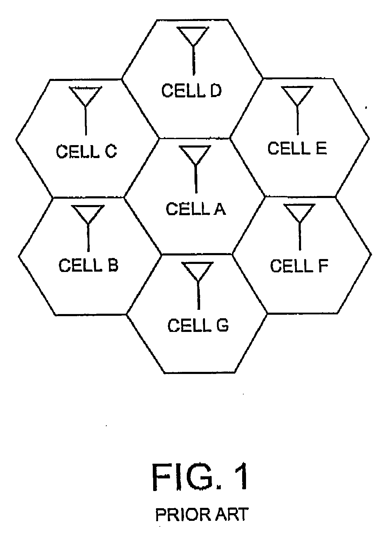

Description will be made regarding an example of an arrangement of a WCDMA wireless system (which will be referred to as "arrangement of WCDMA wireless system" hereafter) with reference to Fig. 1.

It is assumed that a portable wireless terminal device is present within a cell A, namely, the cell A is selected as an active cell. Here, the active cell means a cell registered by the portable wireless terminal device with respect to the position thereof. The portable wireless terminal device monitors the surrounding cells B, C, D, E, F, and G based upon notification information transmitted from the base station of the active cell A. Of these surrounding cells, the cells which have detected are subjected to cell measurement. On the other hand, the undetected cells are subjected to cell search.

In this situation, it is assumed that the portable wireless terminal device moves from cell A toward cell C. In this case, the electric field strength received from the base station in cell A gradually reduces while the electric field strength received from the base station in cell C gradually increases, Eventually, this changes the ranking of the electric field strength of the radio-waves received from the base stations in cells A and B. In this case, cell reselection, in which the active cell is switched from cell A to cell C, is performed.

Various techniques have been proposed for performing the handover operation described above. One such technique is disclosed in Japanese Unexamined Patent Application Publication No. 2002-232929 (Patent document 1).

With the technique disclosed in Patent document 1, in case the portable wireless terminal device can receive sufficient electric power from the base station currently selected for maintaining satisfactory wireless communication without handover operation, increase in the electric power received from the surrounding base stations (communication devices) does not lead to the handover operation which switches from the current base station to one of the surrounding base stations. This suppresses unnecessary handover operation, thereby reducing load of the base station and the mobile wireless terminal device (mobile station) required for controlling the handover operation as well as suppressing excessive consumption of the wireless resources.

Patent document 1 also discloses a technique in which the next base station is selected in the handover operation based upon the past mobile station information held by the base station and the mobile-station information transmitted as notification from the mobile station. This technique provides proper selection of the next base station in the handover operation, thereby improving the success rate of the handover operations.

On the other hand, Japanese Unexamined Patent Application Publication No. 2004-228781 (Patent document 2) discloses another technique. The technique disclosed in Patent document 2 has been developed in order to solve the technical problems remaining in the techniques disclosed in Japanese Unexamined Patent Application Publication No. 7-250365 (Patent document 3) and Japanese Unexamined Patent Application Publication No. 2001-119742 (Patent document 4). That is, the technique disclosed in Patent document 3 has been developed giving consideration to only the presen history information based upon the information whether or not the mobile station has been present in the cell, but giving no consideration to the direction of movement of the mobile station. On the other hand, with the technique disclosed in Patent document 4, cell prediction is performed for the next cell, which the mobile station enters, based upon the cell information regarding the past cells which the mobile station has entered, without giving consideration to the direction of movement of the mobile station. In view of the above problems, with the technique disclosed in Patent document 2, the position registration area to be registered is determined based upon the history information regarding entry/exit of the mobile station to/from a cell.

On the other hand, Japanese Unexamined Patent Application Publication No. 2004-129001 (Patent document 5) discloses a technique in which the handover operation is performed using the communication history. With this technique, in case the handover information stored in the communication history information matches the current handover information, the handover operation is stopped. Furthermore, in case the communication history includes the same handover path descriptor, the handover operation is stopped until a predetermined latest possible handover execution time, thereby avoiding unnecessary handover operation. This reduces power consumption.

Fig. 1 shows an example of a cell layout employed in a WCDMA wireless system. It is assumed that the cells B, C, and D are monitored cells which have been detected, and the cells E, F, and G are undetected cells.

In order to allow cell reselection from cell A to cell C, the electric field strength must be measured for the monitored cells B, C, and D with a certain periodicity. However, excessive measurement leads to increased power consumption of the portable wireless terminal device.

On the other hand, in some cases, reduced monitoring periodicity to suppress such excessive power consumption leads to adverse effects in the cell reselection. In some cases, this leads to a situation in which the portable wireless terminal device goes out of service. Alternatively, this leads to a situation in which the portable wireless terminal device retains a cell with poor radio-wave conditions as active cell, resulting in the reduced success ratio for call requests or incoming calls.

On the other hand, it is assumed that the portable wireless terminal device moves in the reverse direction of that of the movement described above, i.e., moves from cell A toward cell F. In this case, cell F is an undetected cell. Accordingly, there is a need to detect cell F prior to cell reselection.

Cell search for undetected cells, as used to detecting cell F, if performed to an excessive degree leads to increased power consumption of the portable wireless terminal device. On the other hand, reduced cell-research periodicity leads to a situation in which the portable wireless terminal device has no cells available for cell reselection. This leads to a situation in which the portable wireless terminal device goes out of service.

Description has been made regarding the operation during intermittent call waiting time. Also, such an arrangement has a technical problem during communication operations. That is, such reduced cell-search periodicity during communication leads to a delay of adding a cell to the cells available to be the active cell in the handover operation, resulting in difficulty in stable handover operation.

With all of the techniques disclosed in the above Patent documents, including the aforementioned arrangement of the WCDMA wireless system, operations are performed giving consideration to the past communication history, However, such past history information is not used for monitoring the conditions of the radio-waves from the base stations at all.

In order to perform the aforementioned handover operation, there is a need to measure the electric field strength (radio-wave conditions) of the radio-waves from the base stations. Such measurement (monitoring) must be performed for each of the surrounding cells which exhibit the electric field strength equal to or greater than a predetermined value. Furthermore, there is a need to perform the measurement (monitoring) for the other surrounding cells (undetected cells) which exhibit an electric field strength equal to or smaller than the predetermined value since the electric field strength of such cells could become equal to or greater than the predetermined value due to movement of the portable wireless terminal device.

Such measurement (monitoring) provides smooth handover operations, i.e., smooth switching (cell reselection) from the currently-present cell (active cell) to one of the detected cells (monitored cells) among the surrounding cells.

Note that the handover operation for the undetected cell requires the cell search, i.e., synchronization with the undetected cell, prior to measurement of the electric field strength.

With the conventional techniques, the measurement of the electronic field strength is performed with a predetermined periodicity. However, the measurement with an excessive periodicity leads to increased power consumption as described in the above example of the WCDMA system. This can be applied to the undetected cells as well as to the monitored cells.

On the other hand, reduced monitoring periodicity to suppress such excessive power consumption leads to adverse effects. That is, this leads to a situation in which the portable wireless terminal device retains a cell with poor radio-wave conditions as active cell, resulting in various problems. Examples of such problems include reduced success ratio for call requests or incoming calls, difficulty in detecting a cell available for the cell reselection processing, and a situation in which the portable wireless terminal device becomes out of service.

Description has been made regarding the problems occurring in the intermittent call waiting time. Also, in the communication operation, the reduced monitoring periodicity leads to a delay of adding a cell to the cells available to be the active cell in the handover operation, resulting in difficulty in the stable handover operation.

In either case, such simple reduction in the monitoring periodicity of monitoring the electric field strength leads to the aforementioned marked problems, and accordingly, such simple reduction does not function as an effective measure.

However, none of the aforementioned Patent documents disclose any technique for solving such a problem of the tradeoff between the monitoring of the electric field strength and power consumption.

### SUMMARY OF THE INVENTION

The present invention is to provide a radio-wave state monitoring method for monitoring the radio-wave state with low power consumption, a device thereof, a cell reselection method employing this method, and a mobile wireless device.

According to a first aspect of the present invention, a radio-wave state monitoring method is provided. The radio-wave state monitoring method is for monitoring the radio-wave state of cells around an active cell in a cell layout including a plurality of cells, in which a mobile wireless device is present, prior to cell reselection of the active cell. The radio-wave state monitoring method includes statistical processing for cell reselection history with respect to the active cell.

According to a second aspect, the radio-wave state monitoring method further includes processing for calculating monitoring periodicity information for each cell around the active cell based upon results of the statistical processing. The monitoring of the radio-wave state is performed for the cells around the active cell with a periodicity determined based upon the monitoring periodicity information.

According to a third aspect, in the statistical processing, a transition history list is created and updated with respect to cell reselection in the cell layout.

According to a fourth aspect, a series of active cells is added to a transition history list for each cell reselection in which the active cell is switched from a first cell that is one of cells in the cell layout to a second cell that is another one of cells in the cell layout. The series of active cells consisting of a current active cell which is a newly selected active cell in a current cell reselection, a previous active cell which is the active cell selected in the cell reselection immediately prior to the current cell reselection, and an active cell prior to the previous cell reselection which is the active cell selected in the cell reselection two reselections prior to the current cell reselection. The transition history list represents the relation between the current active cell, the previous active cell, and the active cell prior to the previous cell reselection.

According to a fifth aspect, the monitoring periodicity information is calculated with reference to a series of the current active cell, the previous active cell, and the active cell prior to the previous cell reselection based upon the transition history list.

According to a sixth aspect, the monitoring periodicity information is calculated for each cell reselection in which the active cell is switched from the first cell to the second cell. The calculation comprises counting a first number N1, which is the number of the instances of cell reselection with the active cell switching from the first cell to the second cell, based upon the transition history list, and counting a second number N2, which is the number of the instances of cell reselection with the active cell switching from the second cell to each surrounding cell following the previous cell reselection with the active cell switching from the first cell to the second cell. The calculation further comprises calculating a transition probability for each surrounding cell by calculation expression N2/N1.

According to a seventh aspect, in case there is an active cell exhibiting the best radio-wave conditions, determination is made whether or not the surrounding cell, which exhibits the highest value of monitoring periodicity information, is to be switched to the active cell with a reduced threshold of the radio-wave conditions.

According to an eighth aspect, in case there is an active cell exhibiting the best radio-wave conditions, determination is made whether or not the undetected cell, which exhibits the highest value of monitoring periodicity information, is to be switched to the surrounding cell with a reduced threshold of the radio-wave conditions.

According to a ninth aspect of the present invention, a radio-wave state monitoring device is provided. The device is for monitoring the radio-wave state of cells around an active cell in a cell layout including a plurality of cells, in which a mobile wireless device is present, prior to cell reselection of the active cell. The radio-wave state monitoring device includes an antenna, a wireless circuit connected to the antenna, a control unit including a statistical processing unit for performing statistical processing for cell reselection history with respect to the active cell based upon digital information received from the wireless circuit, and a memory for storing results of statistical processing.

According to a tenth aspect, the control unit further includes a calculation unit for calculating monitoring periodicity information for each cell around the active cell based upon results obtained by the statistical processing unit, and a monitoring execution unit for performing monitoring of the radio-wave state of each cell around the active cell with a periodicity determined based upon the monitoring periodicity information calculated by the calculation unit.

According to an eleventh aspect, the statistical processing unit creates and updates a transition history list with respect to cell reselection performed in the cell layout.

According to a twelfth aspect, a cell reselection method is provided. The cell reselection method is for performing cell reselection of an active cell in a cell layout including a plurality of cells, in which a mobile wireless device is present, by monitoring the radio-wave state of cells around the active cell. In the cell reselection method, monitoring of the radio-wave state is performed for the cells around the active cell using the above-mentioned radio-wave state monitoring method.

According to a thirteenth aspect, a cell reselection device is provided. The cell reselection device is for performing cell reselection of an active cell in a cell layout including a plurality of cells, in which a mobile wireless device is present, by monitoring the radio-wave state of cells around the active cell. In the cell reselection device, monitoring of the radio-wave state is performed for the cells around the active cell using the above-mentioned radio-wave state monitoring device.

According to a fourteenth aspect, a mobile wireless device is provided. The mobile wireless device includes a cell reselection unit necessary for wireless communication with a base station within a desired one of a plurality of cells, each of which is a component of a mobile wireless system. The cell reselection unit comprises the above-mentioned cell reselection device.

With the present invention, prior to cell reselection of the active cell in which a mobile wireless device is present, statistical processing is performed for the history information regarding cell reselection of the active cell before monitoring of the radio-wave state of the surrounding cells. This reduces power consumption required for monitoring the radio-wave state.

Furthermore, the monitoring periodicity information is calculated for each of the surrounding cells around the active cell based upon the results of the statistical processing. Then, the mobile wireless device monitors the radio-wave state for each of the surrounding cells around the active cell with a periodicity determined based upon the monitoring periodicity information thus obtained. This reduces power consumption required for monitoring the radio-wave state, as well as enable the mobile wireless device to operate with an increased continuous call waiting time.

Furthermore, this enables the reduced number of instances of search for undetected cells and the reduced number of instances of measurement of the monitored cells while suppressing the risk that the mobile wireless device would enter the state out of service.

Furthermore, with the present invention, cell search and measurement may be performed for the cell which exhibits the maximum monitoring periodicity information with a reduced threshold of the radio-wave conditions before inclusion (or incorporation) of an undetected cell in the surrounding cell group, or inclusion (or incorporation) of a surrounding cell in the active cell group. The reduced threshold is a value lower than thresholds for other cells which exhibit the lower monitoring periodicity information. This improves the stability of the handover operation as well as maintaining the aforementioned advantages.

### BRIEF DESCRIPTION OF THE DRAWINGS

Fig. 1 is a cell layout diagram for describing technical problems in cell reselection performed by conventional mobile wireless systems;
Fig. 2A is a diagram which shows a configuration of an electric field strength monitoring device provided to a portable wireless terminal device according to a first embodiment of the present invention;
Fig. 2B is a functional block diagram which shows a CPU that is a component of the electric field strength monitoring device shown in Fig. 2A;
Fig. 3 is a diagram which shows an example of a transition history list stored for calculation of the transition probability performed by the electric field strength monitoring device shown in Fig. 2A;
Fig. 4 is a diagram which shows an example of a transition probability list created by the electric field strength monitoring device shown in Fig. 2A;
Fig. 5 is a flowchart which shows an electric field strength monitoring procedure performed by the electric field strength monitoring device shown in Fig. 2A;
Fig. 6 is a diagram which shows a specific example of a two-dimensional layout of the cells in the mobile wireless system with a portable wireless terminal device including the electric field monitoring device shown in Fig. 2A;
Fig. 7 is a diagram which shows a transition probability list for a first example of cell reselection in a specific example of the two-dimensional layout of the cells in the mobile wireless system shown in Fig. 6;
Fig. 8 is a diagram which shows a transition probability list for a second example of cell reselection in a specific example of the two-dimensional layout of the cells in the mobile wireless system shown in Fig. 6;
Fig. 9 is a diagram which shows a transition probability list for a third example of cell reselection in a specific example of the two-dimensional layout of the cells in the mobile wireless system shown in Fig. 6; and
Fig. 10 is a diagram which shows a configuration of an electric field strength monitoring device provided to a portable wireless terminal device according to a second embodiment of the present invention.

### DESCRIPTION OF THE PREFERRED EMBODIMENTS

With the present invention, at the time of a mobile wireless device monitoring the radio-wave state of the cells around the active cell, in which the mobile wireless device is present, before cell reselection of the active cell, statistical processing is performed for the history information regarding the cell reselection of the active cell. Furthermore, the monitoring periodicity information (transmission probability) is calculated for each of the cells around the active cell based upon the results of the statistical processing. Then, the mobile wireless device monitors the radio-wave state for each of the cells around the active cell with a periodicity (priority ranking) determined based upon the monitoring periodicity information thus obtained.

### [First embodiment]

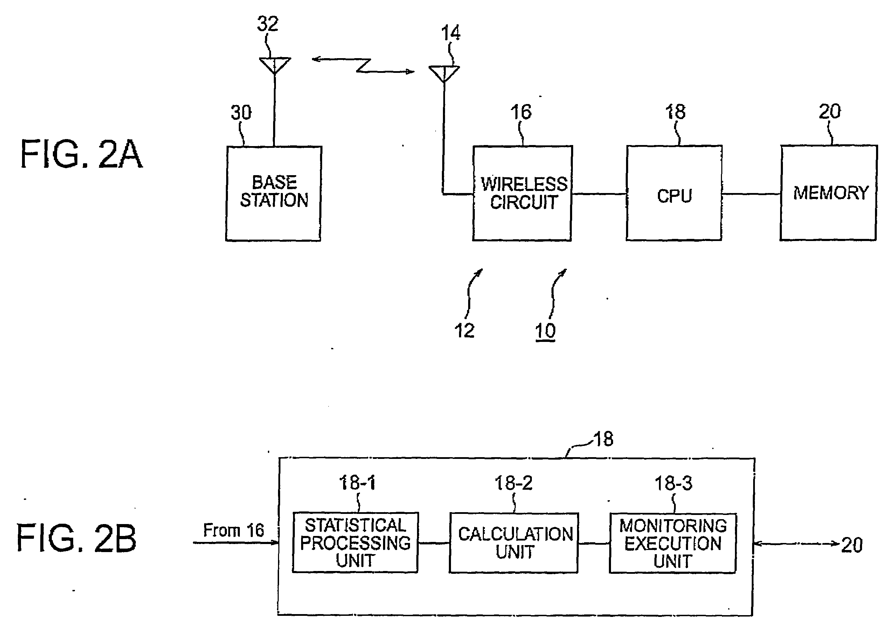

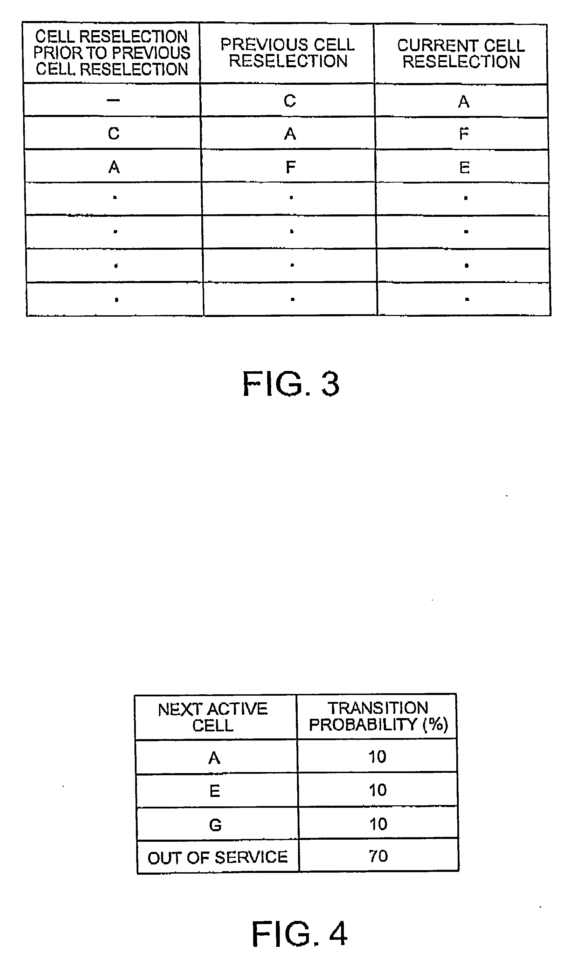

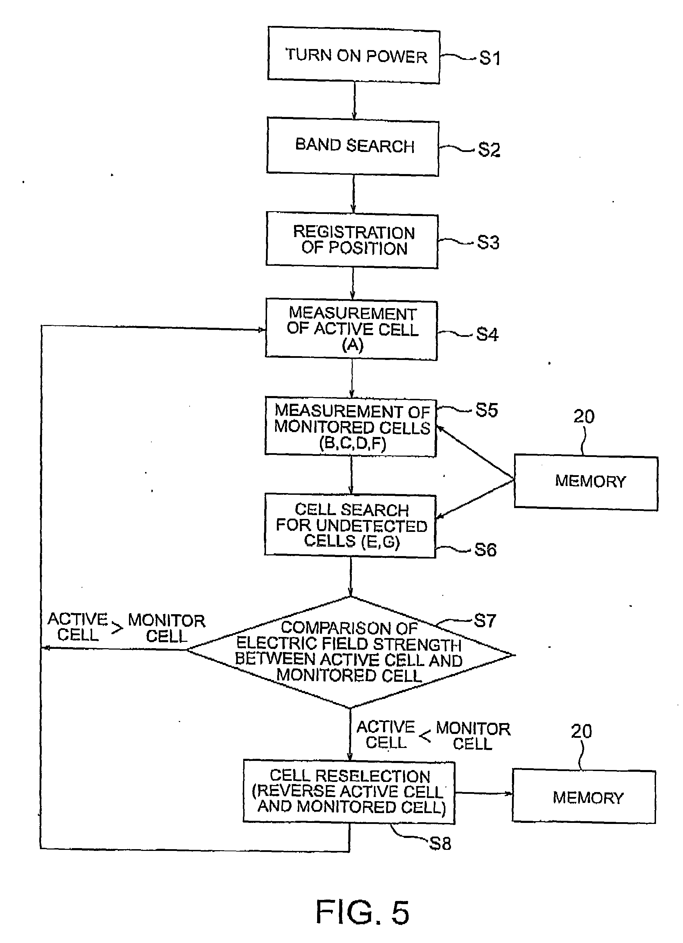

Fig. 2A shows a configuration of an electric-field monitoring device included in a portable wireless terminal device according to a first embodiment of the present invention. Fig. 3 is a diagram which shows a storage example of a transition history list used for calculating the transition probability for an electric field strength monitoring device. Fig. 4 is a diagram which shows a transition probability list calculated by the electric field strength monitoring device. Fig. 5 is a flowchart which shows the electric field strength monitoring procedure performed by the electric field strength monitoring device.

An electric field strength monitoring device 10 of a portable wireless terminal device according to a first embodiment measures radio-wave conditions (electric field strength) prior to cell reselection from the current active cell (currently-present cell). With regard to this measurement, the electric field strength monitoring device 10 measures the electric field strength with a periodicity determined based upon the transition probability calculated from the transition history (cell reselection history) for each of surrounding cells which exhibit an electric field strength greater than a predetermined value. The electric field strength monitoring device 10 includes a wireless circuit 16 connected to an antenna 14 of a portable wireless terminal device 12, a CPU 18, and memory 20. A wireless line is formed between the antenna 14 of the portable wireless terminal device 12 (which will be referred to as "wireless terminal" hereafter) and an antenna of a base station 30 through radio-waves. The CPU 18 may be called a control unit and may be implemented by a computer, such as a micro-computer,

The wireless circuit 16 converts the information included in the radio-waves received by the antenna 14 into digital information, and transmits the digital information to the CPU 18. The information includes timing information (which indicates the boundary of the slot) which represents whether or not the wireless terminal 12 is synchronized with the base station 30 and so forth, as well as electric-field-strength information (digital value, which will simply be referred to as "electric field strength" hereafter) regarding the electric field strength (radio-wave conditions) received from the surrounding cells (base stations thereof) and the notification information from the base station 30. This information is obtained from the radio-waves received by the antenna 14 in the form of digital information using known techniques.

The CPU 18 performs measurement (monitoring) of the electric field strength of the surrounding cells based upon the notification information received from the wireless circuit 16, creation of the transition history list based upon the measurement results, and creation of the transition probability list based upon the transition history. The transition history list and the transition probability list thus created are stored in the memory 20. The transition history is added to the transition history list for each cell reselection. The transition probability list is updated for each cell reselection.

Fig. 3 shows a part of an example of the transition history list. In the present example, the transition history list is created for each row as shown in Fig. 3 in the form of a combination of: the current active cell which is the active cell at the time of the current cell reselection; the previous active cell which is the active cell at the time of the cell reselection immediately prior to the current cell reselection, and the active cell prior to the previous active cell which is the active cell two reselections prior to the current cell reselection. Now, description will be made regarding an example of the cell layout shown in Fig. 1. It is assumed that cell reselection has been performed in a certain sequence, with the active cell being switched to a cell out of service, cell C, cell A, cell F, and cell E, in that order. In this case, the transition history list is created for each row as shown in Fig. 3 in the form of a combination of the three cell-reselection instances which have been sequentially performed, i.e., the combination thereof with the active cell switched to a cell out of service, cell C, and cell A, in that order, the combination thereof with the active cell switched to cell C, cell A, and cell F, in that order, the combination thereof with the active cell switched to cell A, cell F, and cell E, in that order. The CPU 18 adds a new combination of the history to the transition history list.

Fig. 4 shows an example of the transition probability list. The transition probability list is created as follows. Description will also be made regarding an example of the cell layout shown in Fig. 1. For example, it is assumed that the previous active cell is cell A, and the current active cell is the cell F. The CPU 18 counts the number of instances of the cell reselection with the active cell switching from cell A to cell F based upon the transition history list. It is assumed that the number of such instances (first number N1) is 10. Furthermore, the CPU 18 counts the numbers of instances of cell reselection with the active cell switching to cell A, cell E, and cell G, each of which can be selected as the next active cell, following the cell reselection with the active cell switching from cell A to cell F. Specifically, the CPU 18 counts the number of instances of cell reselection with the active cell switching from cell F to cell A following the cell reselection with the active cell switching from cell A to cell F. Also, the CPU 18 counts the number of instances of cell reselection with the active cell switching from cell F to cell E following the cell reselection with the active cell switching from cell A to cell F. Also, the CPU 18 counts the number of instances of cell reselection with the active cell switching from cell F to cell G following the cell reselection with the active cell switching from cell A to cell F. Furthermore, the CPU 18 counts the number of instances of cell reselection with the active cell switching from cell F to a cell out of service following the cell reselection with the active cell switching from cell A to cell F. Description will be made with each of these number as a second number N2, which is the number of instances of a specific series of cell reselection. It is assumed that the number of instances with the active cell switching from cell F to cell A is 1, the number of instances with the active cell switching from cell F to cell E is 1, the number of instances with the active cell switching from cell F to cell G is 1, and the number of instances with the active cell switching from cell F to a cell out of service is 7. In this case, the transition probabilities of cell reselection with the active cell switching from cell F to cell A, cell E, cell G, and a cell out of service, are calculated to be 10%, 10%, 10%, and 70%, respectively, using the expression N2/N1, as shown in Fig. 4. This means that the highest probability is that the wireless terminal 12 cannot select any active cell, i.e., will go out of service. Note that the CPU 18 updates the transition probability list for each cell reselection.

The memory 20 (nonvolatile storage unit) stores a program for executing the processing procedure shown in Fig. 5. The CPU 18 reads out and executes the program stored in the memory 20, thereby performing the aforementioned measurement and creation of the aforementioned lists. This is a principal unit of the electric field strength monitoring device 10.

Fig. 2B is a functional block diagram which shows a schematic configuration of the CPU 18 having a function for executing the operation described below. A statistical processing unit 18-1 performs statistical processing on the cell reselection history with respect to the active cell. A calculation unit 18-2 calculates the monitoring periodicity information (transition probability) for each of cells around the active cell based upon the results of the statistical processing obtained by the statistical processing unit 18-1. A monitoring execution unit 18-3 executes monitoring of the radio-wave conditions with respect to each of the cells around the active cell with a periodicity (priority ranking) determined based upon the monitoring periodicity information calculated by the calculation unit 18-2.

Next, description will be made regarding the operation of the first embodiment with reference to Figs. 2A through 9.

Upon turning on the power supply of the wireless terminal 12 (S1 in Fig. 5), the periodicity channel search (band search) is performed under control of the CPU 18 through the wireless circuit 16, thereby detecting the periodicity channel (S2 in Fig. 5). Then, the position of the wireless terminal 12 is registered by the base station 30 within the currently-present cell through the channel detected by the band search (S3 in Fig. 5).

Following registration of the position of the wireless terminal 12, the wireless terminal 12 performs measurement of the electric field strength of the radio-wave from the active cell under control of the CPU 18 through the wireless circuit 16 based upon the active cell identification information included in the notification information transmitted from the base station 30, where registration of the position has been performed, to the wireless terminal 12 (S4 in Fig. 5). In the WCDMA wireless system, each cell can be identified using a spread code which is unique to the cell and which is called a scrambling code. On the other hand, each cell employs the same carrier frequency. The wireless terminal 12 performs measurement of the electric field strength for the active cell with, for example, a predetermined periodicity.

Furthermore, the wireless terminal 12 performs monitoring of the electric field strength with respect to the cells to be monitored (which will also be referred to as "monitored cell" hereafter), under control of the CPU 18 through the wireless circuit 16 (S5 in Fig. 5). The measurement of the electric field strength will also be referred to as "cell measurement" hereafter.

The measurement of the electric field strength (cell measurement) with respect to each monitored cell is performed with a periodicity (e.g., the number of measurement instances in the measurement period) determined based upon the transition probability with reference to the transition probability list. Specifically, the aforementioned periodicity is determined by classifying the transition probability into a predetermined number of transition probability classes with a predetermined range. That is, the periodic measurement is performed on a priority basis, or with a skipping rate (i.e., with a rate in which certain measurements are skipped in a particular instance) determined based upon the transition probability. Note that the lower the priority, the higher the skipping rate.

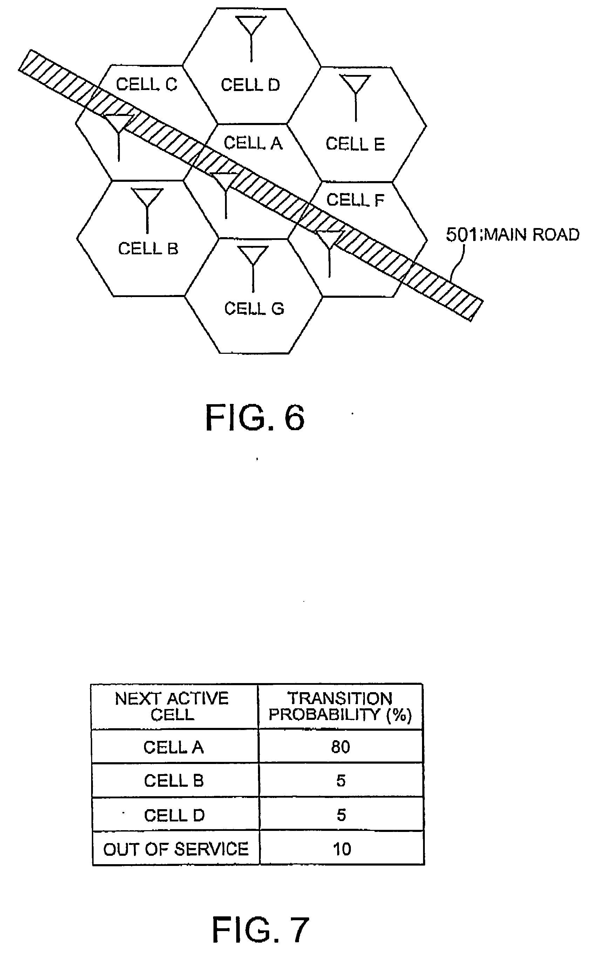

Specific description will be made below with reference to Fig. 6 showing the same cell layout as that shown in Fig. 1. It is assumed that the wireless terminal has entered cell A from a position out of service through cell C, and is currently present within cell A, for convenience of description.

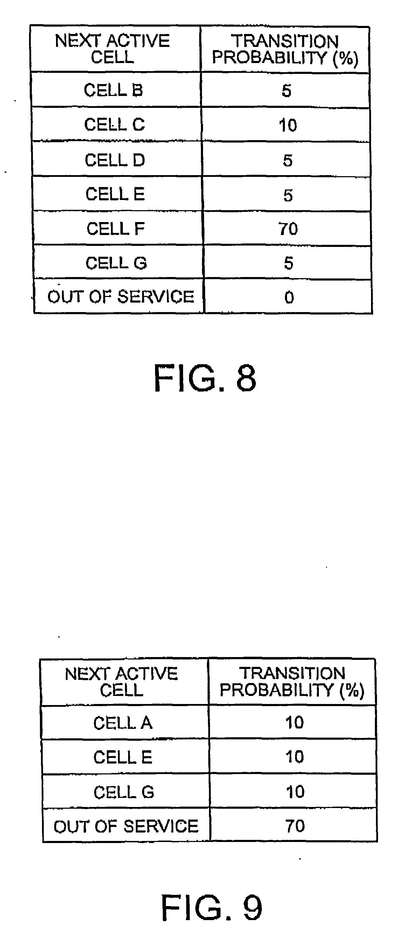

For example, it is assumed that the terminal device 12 is notified of cells A to G through the aforementioned notification information. Furthermore, it is assume that the current active cell is cell A. Furthermore, the monitored cells are cells B, C, D, and F and cell C is the active cell in the previous cell measurement. Furthermore, it is assumed that the current transition probability list is the same as that shown in Fig. 8. In this case, the cell measurement for the monitored cell F is performed every time. On the other hand, the cell measurement for the other monitored cells is performed with a predetermined periodicity.

Such operation reduces the number of measurement instances involving power consumption. Thus, this suppresses power consumption in the battery of the wireless terminal 12.

On the other hand, in a case that the wireless terminal 12 has detected in the measurement of the monitored cells that the electric field strength of the radio-waves from any one of the monitored cells has been reduced to a value smaller than a predetermined value due to movement of the wireless terminal 12, the wireless terminal 12 notifies the base station 30 of the detection results so as to update the notification information managed by the base station 30. Specifically, such a monitored cell is switched to an undetected cell.

In addition to the aforementioned processing, the wireless terminal 12 performs measurement of the electric field strength of the radio-waves from the undetected cells based upon the undetected-cell identification information included in the notification information under control of the CPU 18 through the wireless circuit 16 (S6 in Fig. 5). Note that in this case, the wireless terminal 12 performs correction of the timing between the base station 30 within the undetected cell and the wireless terminal 12, i.e., synchronization processing, in the same way as with conventional techniques.

The reason why the aforementioned measurement of the undetected cells is performed is that an undetected cell which had been set to an undetected cell before the current measurement can exhibit an increase in its electric field due to movement of the wireless terminal 12, and accordingly, the undetected cell will then have the same priority as that of the current monitored cells. In this case, such a cell is switched from an undetected cell to a monitored cell. More specifically, in a case that an undetected cell exhibits approximately the same electric field strength as that of the current monitored cells, the undetected cell is switched to a monitored cell.

Note that the measurement of the electric field strength is performed for the undetected cells on a priority basis, or with a skipping rate determined by the transition probability in the same way as with the monitored cells. Note that the lower the priority, the higher the skipping rate compared with a case of the monitored cell.

For example, it is assumed that the aforementioned notification information indicates that cell A is the current active cell, that cells B, C, D, and F are the monitored cells, that cells E and G are the undetected cells, and that cell C was the active cell in the previous cell measurement. Furthermore, it is assumed that the current transition probability list is the same as that shown in Fig. 8. In this case, the cell measurement for the undetected cells E and G is performed with a skipping rate corresponding to the transition probability.

This further reduces the number of measurement instances for the undetected cells involving power consumption. Thus, this further suppresses power consumption in the battery of the wireless terminal 12.

On the other hand, in case the wireless terminal 12 has detected in the measurement of the undetected cells that the electric field strength of the radio-waves from any one of the undetected cells has been increased to a value equal to or greater than a predetermined value due to movement of the wireless terminal 12, the wireless terminal 12 notifies the base station 30 of the detection results so as to update the notification information managed by the base station 30.

In case the active cell exhibits a greater electric field than that of the monitored cells in the current measurement in the same way as with the previous measurement (in case "active cell" > "monitored cell" in S7 shown in Fig. 5), the operation procedure is repeated from the measurement for the active cell (loop S7, which is the step for making a comparison of the electric field strength between the active cell and the monitored cells, S4, S5, and S6).

Conversely, in case at least one of the monitored cells exhibits a greater electric field than that of the active cell (in case "active cell" < "monitored cell" in S7 shown in Fig. 5), cell reselection processing is performed. That is, in this case, the active cell and the monitored cell are reversed (S8 in Fig. 8). Then, the new history of cell reselection is added to the cell transition history stored in the memory 20. That is, the transition history list and the transition probability list are updated.

The cell reselection is performed under control of the CPU 18. For each cell reselection processing, the learning of the transition history is performed as follows. With the learning of the transition history, first, the transition history list is updated as described above. Next, the transition probability list is updated.

With regard to the aforementioned operation of the wireless terminal 12, the measurement of the active cell A is performed as described above (S4 in Fig. 5). Furthermore, the measurement of the monitored cells B, C, D, and F (S5 in Fig. 5) and the search for undetected cells E and G (S6 in Fig. 5) are performed. Now, it is assumed that determination has been made that multiple cells exhibit electric fields greater than that of the active cell (S7 in Fig. 5), i.e., multiple cells have been selected as active cell candidates as a result of this determination.

In this case, it is assumed that the monitored cell F exhibits the greatest electric field strength among the active cell candidates. In this case, the monitored cell F is switched to an active cell, i.e., cell reselection is performed.

Description will be made regarding a specific example. In this example, the wireless terminal 12 enters the cell C from a position out of WCDMA service along a main road 501. Subsequently, the wireless terminal 12 moves toward another position out of service again, through the cells A and F. Description will be made regarding an example of the operation of the wireless terminal 12 for call waiting time during the aforementioned movement thereof.

In the aforementioned movement, the wireless terminal 12 moves toward the cell C from a position out of WCDMA service while performing band search for determining whether or not the wireless terminal 12 has entered the cell C.

Upon detection of cell C in the band search, the wireless terminal 12 performs registration of the position thereof for entry to cell C, and the wireless terminal 12 enters the intermittent call waiting state.

The wireless terminal 12 in the intermittent call waiting state searches for cells A, B, and D, which are the surrounding cells, based upon the notification information (notification information transmitted from the base station 30 within cell C) received from cell C serving as the active cell, through the wireless circuit 16 under control of the CPU 18.

It is assumed that the wireless terminal 12, which has performed registration of the position thereof for entry to cell C from a position out of service, has a transition probability list accumulated by learning until the point in time of transition to the aforementioned intermittent call waiting state as shown in Fig. 7.

As can be clearly understood from Fig. 7, in case the active cell has been switched from a position out of service to cell C in the registration of the position of the wireless terminal 12, the next cell reselection is performed to cell A with the maximum transition probability (80%).

The reason is that the user of the wireless terminal 12 often moves along the main road 501.

Accordingly, the wireless terminal 12 performs cell search for detecting the surrounding cells in order of the transition probability shown in Fig. 7.

Furthermore, the wireless terminal 12 performs measurement of the surrounding cells with a priority determined according to the order of the transition probability shown in Fig. 7.

Specifically, in the measurement of the surrounding cells, the wireless terminal 12 performs measurement of cell A for each periodic measurement as described with reference to Fig. 5. On the other hand, the wireless terminal 12 performs measurement of cells B and D with a periodicity determined based upon the transition probability, e.g., once per every number of measurement instances determined beforehand.

Subsequently, it is assumed that the wireless terminal 12 moves from cell C toward cell A along the main road. Description will be made regarding the operation of the wireless terminal 12 during this movement.

The wireless terminal 12 performs search for undetected cells and measurement of the monitored cells in priority order determined according to the transition probability in the same way as described above.

In the measurement and search, upon the wireless terminal 12 approaching cell A, the wireless terminal 12 receives radio-wave from cell A of increased electric field strength while receiving radio-waves from cell C of reduced electric field strength. Eventually, the ranking of the electric field strength is changed with respect to cells C and A around the boundary between cells C and A.

Upon the wireless terminal 12 detecting change in the ranking of the electric field strength received from these cells, cell reselection is performed, i.e., the active cell is switched from cell C to cell A.

The base station 30 within cell A, which has been set to the active cell in the aforementioned cell reselection, transmits the notification information to the wireless terminal 12. The notification information includes the information regarding the six cells of B, C, D, E, F, and G, as the surrounding cells.

Of these six surrounding cells, the detected cells are cell C, which is the previous active cell, and cells B and D which are the previous surrounding cells. The other cells, i.e., cells E, F, and G are the undetected cells at this point in time.

Then, upon execution of the aforementioned cell reselection, i.e., switching of the active cell to cell A, the aforementioned transition history list and the transition probability list are updated in the processing performed by the CPU 18.

Now, it is assumed that the wireless terminal 12, which has registered the position thereof in cell A, stores the transition probability list as shown in Fig. 8, with the current active cell as cell A. Furthermore, it is assumed that the wireless terminal 12 moves from cell A toward cell F along the main road. Description will be made regarding the operation of the wireless terminal 12 during this movement.

In this case, the wireless terminal 12 performs measurement of the monitored cells and search for undetected cells in priority order determined according to the transition probability in the same way as described above.

In the measurement and search, upon the wireless terminal 12 approaching cell F, the wireless terminal 12 receives radio-wave from the cell F with increased electric field strength while receiving radio-wave from cell A with reduced electric field strength. Eventually, the ranking of the electric field strength is changed with respect to cells A and F around the boundary between cells A and F.

Upon the wireless terminal 12 detecting this change in the ranking of the electric field strength received from these cells, cell reselection is performed, i.e., the active cell is switched from cell A to cell F.

The base station 30 within cell F, which has been set to the active cell in the aforementioned cell reselection, transmits the notification information to the wireless terminal 12, The notification information includes the information regarding cells A, E, and G as the surrounding cells.

Then, upon execution of the aforementioned cell reselection, i.e., switching of the active cell to cell F, the aforementioned transition history list and the transition probability list are updated in the processing performed by the CPU 18.

It is assumed that the wireless terminal 12, which has registered the position thereof in cell F, stores the transition probability list as shown in Fig. 9, with the current active cell as cell F.

As shown in Fig. 9, the transition probabilities to cells A, E, and G following cell reselection from cell A to cell F are the same. In this case, the wireless terminal 12 performs search and measurement for each surrounding cell without any particular priority.

Subsequently, upon the wireless terminal 12 moving from cell F to a position out of service, eventually, the wireless terminal 12 receives the radio-wave from cell F with a lower electric field strength than a predetermined threshold. Furthermore, there is no cell which provides radio-wave to the wireless terminal 12 with sufficient electric field strength. Accordingly, the wireless terminal 12 enters the state out of the service.

In all cells selected as the currently-present cell (active cell) described above, the wireless terminal 12 performs cell search for the surrounding cells and measurement thereof following the cell search with a priority determined according to the order of the transition probability statistically calculated based upon the cell reselection history accumulated until the previous cell reselection, i.e., the transition history.

This suppresses the number of instances of cell search for the surrounding cells and the number of instances of the measurement following the cell search. Thus, this allows the wireless terminal 12 to operate with an increased continuous call waiting period of time while suppressing power consumption in the wireless terminal 12.

Furthermore, while the present embodiment suppresses the number of the instances of cell search for the surrounding cells and the number of instances of measurement thereof following the cell search, the present embodiment suppresses the risk that the wireless terminal 12 would enter a state out of service, regardless of the reduced number of measurement instances.

As described above, with the first embodiment, cell search for the surrounding cells with respect to the currently-present cell (active cell) and the measurement thereof following the cell search are performed with a priority determined according to the order of the transition probability statistically calculated based upon the cell reselection history accumulated until the previous cell reselection, i.e., the transition history. Thus, this suppresses the number of instances of search for undetected cells and the number of instances of the measurement of the monitored cells. This allows the wireless terminal 12 to operate with an increased continuous call waiting period of time while suppressing power consumption in the wireless terminal 12.

Furthermore, the present embodiment has the advantage of suppressing the risk that the wireless terminal 12 would enter a state out of service, regardless of the reduced number of instances of search for undetected cells and the reduced number of instances of measurement of the monitored cells, as compared with the conventional techniques.

### [Second embodiment]

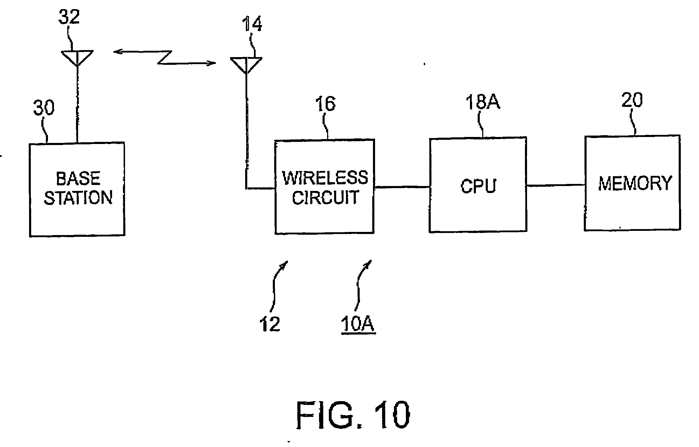

Fig. 10 shows a configuration of an electric field strength monitoring device provided to a portable wireless terminal device according to a second embodiment of the present invention.

The major difference between the second embodiment and the first embodiment is as follow. With the second embodiment, addition of an undetected cell to (inclusion or incorporation thereof in) the monitored cell group, which is performed prior to cell reselection with reference to the transition history, is performed with a reduced electric field strength threshold for the undetected cell exhibiting the maximum transition probability among the undetected cells. The reduced electric field strength threshold for the undetected cell exhibiting the maximum transition probability is lower than the electric field strength thresholds for other undetected cells exhibiting the lower transition probabilities. In addition, addition of a monitored cell to an active cell group is performed with a reduced electric field strength threshold for the monitored cell exhibiting the maximum transition probability among the monitored cells. The reduced electric field strength threshold for the monitored cell exhibiting the maximum transition probability is lower than the electric field strength thresholds for other monitored cells exhibiting the lower transition probabilities.

That is, an electric field monitoring device 10A according to the second embodiment has a configuration as shown in Fig. 10. With such a configuration, a CPU 18A performs search for undetected cells with a reduced electric field strength threshold for the undetected cell exhibiting the maximum transition probability among the undetected cells. The reduced electric field strength threshold for the undetected cell exhibiting the maximum transition probability is lower than the electric field strength thresholds for the other undetected cells exhibiting the lower transition probabilities. Furthermore, the CPU 18A performs measurement of the monitored cells with a reduced electric field strength threshold for the monitored cell exhibiting the maximum transition probability among the monitored cells. The reduced electric field strength threshold for the monitored cell exhibiting the maximum transition probability is lower than the electric field strength thresholds for the other monitored cells exhibiting the lower transition probabilities. The other components of the second embodiment are the same as those of the first embodiment. Accordingly, the same components are denoted by the same reference numerals, and description thereof will be omitted.

Next, description will be made regarding the operation of the second embodiment with reference to Figs. 6 through 10.

Description will be made below regarding the handover operation during the movement of the wireless terminal 12 according to the second embodiment with reference to an example of movement as follows.

In the example of movement as shown in Fig. 6, the wireless terminal 12 enters cell C from a position out of WCDMA service along a main road 501. Subsequently, the wireless terminal 12 moves toward another position out of service again, through cells A and F. Description will be made below regarding the operation of the wireless terminal 12 for communication during the aforementioned movement thereof.

In the aforementioned movement, the wireless terminal 12 moves toward cell C from a position outside of the WCDMA service area while performing band search for determining whether or not the wireless terminal 12 has entered cell C.

Upon detection of cell C in the band search, the wireless terminal 12 performs registration of the position thereof for entry to cell C, and the wireless terminal 12 enters the intermittent call waiting state. Subsequently, the wireless terminal 12 enters the communication state through call request or incoming call.

The wireless terminal 12 in the communication state searches for cells A, B, and D, which are the surrounding cells, based upon the notification information (notification information transmitted from the base station 30 within cell C) received from cell C serving as the active cell, through the wireless circuit 16 under control of the CPU 18A.

It is assumed that at the point in time of transition to the aforementioned communication state, the wireless terminal 12, which has performed registration of the position thereof for entry to cell C from a position out of service, has a transition probability list accumulated by past learning and storage until the point in time of the aforementioned position registration as shown in Fig. 7.

As can be clearly understood from Fig. 7, in case the active cell has been switched from a position out of service to cell C in the registration of the position of the wireless terminal 12, cell A is set to the active cell with the maximum transition probability in the next cell reselection.

In case cell A has not been detected as a surrounding cell, the wireless terminal 12 performs cell search to detect the surrounding cells in order of the transition probability shown in Fig. 7. Specifically, in this case, the wireless terminal 12 performs cell search for cell A which exhibits the maximum transition probability with the highest priority, e.g., in each periodic measurement.

Furthermore, the wireless terminal 12 performs cell search for cell A using a special electric field strength threshold α prepared for use in search for the cell which exhibits the maximum transition probability, i.e., using a lower electric field strength threshold than that used with the other cells B and D which exhibit the lower transition probabilities. This facilitates detection of the cell A.

On the other hand, the wireless terminal 12 performs cell search for cells B and D with a periodicity determined beforehand according to the transition probabilities thereof, i.e., once every number of instances of the predetermined periodic measurement. That is, the time interval of the cell search for cells B and D is longer than that of cell search for cell A. Furthermore, the wireless terminal 12 performs cell search with a normal electric field threshold without changing the electric field threshold.

Furthermore, the wireless terminal 12 performs measurement of the surrounding cells in monitoring thereof following detection of the surrounding cells, with a priority ranking determined according to the order of the transition probability shown in Fig. 7 in the same way.

In the measurement of the surrounding cells, the wireless terminal 12 performs the measurement of cell A for each periodic measurement as described with reference to Fig. 5.

Furthermore, the wireless terminal 12 performs the measurement of cell A with a special electric field strength threshold β prepared for the cell which exhibits the maximum transition probability, i.e., with a lower electric field strength threshold than that of the other detected cells, e.g., cells B, D, and so forth. Accordingly, cell A enters a state which allows cell A to readily switch to the active cell candidate.

As described above, with the WCDMA wireless system for realizing the present invention, the wireless terminal 12 makes a request to the base station 30 within cell C for addition of cell A to the active cell group, i.e., for inclusion of cell A in the active cell group. In response to the request, cell A is added to the active cell group, which is the group of cells available for the next cell reselection.

That is, with the WCDMA wireless system for realizing the present invention, the wireless terminal 12 has multiple active cell candidates. This enables a soft handover operation without involving momentary disconnection during the handover operation, unlike the conventional communication systems. Thus, this improves the stability of the handover operation for switching the active cell from cell C to cell A.

Furthermore, measurement is performed for the detected cells B, D, and so forth, with a periodicity determined beforehand according to the transition probability, i.e., once every predetermined number of instances of the periodic measurement.

It is assumed that the wireless terminal 12 further moves along the main road 501, cell reselection is performed from cell C to cell A in the same way as the aforementioned operation for the cell reselection from a position out of service to cell C. Note that the transition probability used in this cell reselection is calculated in the same way as described above.

In some cases, the wireless terminal 12 has multiple active cells. In this case, the wireless terminal 12 selects an active cell which exhibits the highest electric field strength to be the current active cell. Furthermore, the wireless terminal 12 creates the transition history list and the transition probability list based upon the current active cell in the same way as described above.

Furthermore, the wireless terminal 12 performs search for undetected cells and measurement of the monitored cells in priority order determined according to the transition probability in the same way as described above.

Furthermore, the electric field strength thresholds used for the search for undetected cells and the cell measurement of the monitored cells are determined in generally the same way as described above.

Thus, as a result of such processing, cell A enters a state which allows cell A to readily switch to the active cell candidate, thereby improving the stability of the handover operation for switching the active cell from cell C to cell A.

Subsequently, it is assumed that the wireless terminal 12 further moves from cell A toward cell F along the main road 501. In this case, the wireless terminal 12 performs search for undetected cells and the measurement of the monitored cells in priority order determined according to the transition probability in the same way as described above.

At the same time, the electric field strength thresholds used for the search and cell measurement are determined in generally the same way as described above.

Thus, such processing facilitates inclusion of the cell F among the active cell candidates, thereby improving the stability of the handover operation for switching the active cell from cell A to cell F.

As described above, with the second embodiment having such a configuration, the wireless terminal 12 performs cell search for the surrounding cells around the currently-present cell (active cell) and cell measurement thereof following the cell search with the priorities determined according to the order of the transition probability statistically calculated based upon the cell reselection history accumulated until the previous cell reselection, i.e., the transition history. Furthermore, with the second embodiment, the wireless terminal 12 performs determination with regard to the electric field strength with a reduced electric field strength threshold for the cell which exhibits the maximum transition probability among the cells. This improves the stability of the handover operation while maintaining the advantages of the first embodiment.

While detailed description has been made regarding the embodiments according to the present invention with reference to the drawings, the specific configuration of the present invention is not restricted to the precise embodiments described above. Rather, various changes and modifications may be made without departing from the essence of the present invention, which are also encompassed in the technical scope of the present invention.

For example, while description has been made in the aforementioned embodiments regarding an arrangement in which transition is performed to the active cell candidate exhibiting the maximum electric field strength, an arrangement may be made in which transition is performed giving consideration to factors other than the electric field strength.

While description has been made in the aforementioned embodiments regarding an arrangement employing the WCDMA method, the present invention may be applied to an arrangement employing other methods which allow the wireless terminal to hold multiple active cells,

Description has been made in the aforementioned embodiments regarding an arrangement in which the transition probability is calculated for the previous cell reselection and the cell reselection prior to the previous cell reselection based upon the transition history list. Also, an arrangement may be made in which the transition probability is calculated with respect to a series further including additional past cell reselections, as well as the previous cell reselection and the cell reselection prior to the previous cell reselection.

### [Industrial Applicability]

The present invention disclosed in this specification may be applied to various kinds of portable wireless terminal devices such as cellular phones, PDAs, and so forth.

## Claims

1. A radio-wave state monitoring method for monitoring the radio-wave state of cells around an active cell in a cell layout including a plurality of cells (A-G), in which a mobile wireless device (12) is present, prior to cell reselection of said active cell, said radio-wave state monitoring method including statistical processing for cell reselection history with respect to said active cell.

2. A radio-wave state monitoring method according to Claim 1, further including processing for calculating monitoring periodicity information for each cell around said active cell based upon results of said statistical processing,
wherein monitoring of the radio-wave state is performed for the cells around said active cell with a periodicity determined based upon said monitoring periodicity information.

3. A radio-wave state monitoring method according to Claim 1 or 2, wherein in said statistical processing, a transition history list is created and updated with respect to cell reselection in said cell layout.

4. A radio-wave state monitoring method according to any one of Claims 1-3, wherein a series of active cells is added to a transition history list for each cell reselection (S8) in which the active cell is switched from a first cell that is one of cells in said cell layout to a second cell that is another one of cells in said cell layout,
said series of active cells consisting of:
a current active cell which is a newly selected active cell in a current cell reselection;
a previous active cell which is the active cell selected in the cell reselection immediately prior to said current cell reselection; and
an active cell prior to said previous cell reselection which is the active cell selected in the cell reselection two reselections prior to said current cell reselection,
and wherein said transition history list represents the relation between said current active cell, said previous active cell, and said active cell prior to the previous cell reselection.

5. A radio-wave state monitoring method according to Claim 3 or 4, wherein said monitoring periodicity information is calculated with reference to a series of said current active cell, said previous active cell, and said active cell prior to the previous cell reselection based upon said transition history list.

6. A radio-wave state monitoring method according to any one of Claims 3-5, wherein said monitoring periodicity information is calculated for each cell reselection in which said active cell is switched from said first cell to said second cell,
and wherein the calculation comprises:
counting a first number N1, which is the number of the instances of cell reselection with the active cell switching from said first cell to said second cell, based upon said transition history list;
counting a second number N2, which is the number of the instances of cell reselection with the active cell switching from said second cell to each surrounding cell following said previous cell reselection with the active cell switching from said first cell to said second cell; and
calculating a transition probability for each surrounding cell by calculation expression N2/N1.

7. A radio-wave state monitoring method according to any one of Claims 2-6, wherein in case there is an active cell exhibiting the best radio-wave conditions, determination is made whether or not the surrounding cell, which exhibits the highest value of said monitoring periodicity information, is to be switched to the active cell with a reduced threshold of the radio-wave conditions.

8. A radio-wave state monitoring method according to any one of Claims 2-6, wherein in case there is an active cell exhibiting the best radio-wave conditions, determination is made whether or not the undetected cell, which exhibits the highest value of said monitoring periodicity information, is to be switched to the surrounding cell with a reduced threshold of the radio-wave conditions.

9. A radio-wave state monitoring device (10) for monitoring the radio-wave state of cells around an active cell in a cell layout including a plurality of cells (A-G), in which a mobile wireless device (12) is present, prior to cell reselection of said active cell, said radio-wave state monitoring device including:
an antenna (14);
a wireless circuit (16) connected to said antenna;
a control unit (18, 18A) including a statistical processing unit (18-1) for performing statistical processing for cell reselection history with respect to said active cell based upon digital information received from said wireless circuit; and
a memory (20) for storing results of statistical processing.

10. A radio-wave state monitoring device according to Claim 9, said control unit further including:
a calculation unit (18-2) for calculating monitoring periodicity information for each cell around said active cell based upon results obtained by said statistical processing unit; and
a monitoring execution unit (18-3) for performing monitoring of the radio-wave state of each cell around said active cell with a periodicity determined based upon said monitoring periodicity information calculated by said calculation unit.

11. A radio-wave state monitoring device according to Claim 9 or 10, wherein said statistical processing unit creates and updates a transition history list with respect to cell reselection performed in said cell layout.

12. A radio-wave state monitoring device according to any one of Claims 9-11, wherein said statistical processing unit adds a series of active cells to a transition history list for each cell reselection (S8) in which the active cell is switched from a first cell that is one of cells in said cell layout to a second cell that is another one of cells in said cell layout,
and wherein said series of active cells consists of:
a current active cell which is a newly selected active cell in said current cell reselection;
a previous active cell which is the active cell selected in the cell reselection immediately prior to said current cell reselection; and
an active cell prior to said previous cell reselection which is the active cell selected in the cell reselection two reselections prior to said current cell reselection,
and wherein said transition history list represents the relation between said current active cell, said previous active cell, and said active cell prior to said previous cell reselection.

13. A radio-wave state monitoring device according to Claim 11 or 12, wherein said calculation unit calculates said monitoring periodicity information with reference to a series of said current active cell, said previous active cell, and said active cell prior to said previous cell reselection based upon said transition history list.

14. A radio-wave state monitoring device according to any one of Claims 11-13, wherein said calculation unit calculates said monitoring periodicity information for each cell reselection in which said active cell is switched from said first cell to said second cell,
and wherein said calculation comprises:
a step for counting a first number N1, which is the number of the instances of cell reselection with the active cell switching from said first cell to said second cell, based upon said transition history;
a step for counting a second number N2, which is the number of the instances of cell reselection with the active cell switching from said second cell to each surrounding cell following said previous cell reselection with the active cell switching from said first cell to said second cell; and
a step for calculating a transition probability for each surrounding cell by calculation expression N2/N1.

15. A radio-wave state monitoring device according to any one of Claims 10-14, wherein in case there is an active cell exhibiting the best radio-wave conditions, said monitoring execution unit determines whether or not the surrounding cell, which exhibits the highest value of said monitoring periodicity information, is to be switched to the active cell with a reduced threshold of the radio-wave conditions.

16. A radio-wave state monitoring device according to any one of Claims 10-14, wherein in case there is an active cell exhibiting the best radio-wave conditions, said monitoring execution unit determines whether or not the undetected cell, which exhibits the highest value of said monitoring periodicity information, is to be switched to the surrounding cell with a reduced threshold of the radio-wave conditions.

17. A cell reselection method for performing cell reselection of an active cell in a cell layout including a plurality of cells (A-G), in which a mobile wireless device (12) is present, by monitoring the radio-wave state of cells around said active cell, wherein monitoring of the radio-wave state is performed for the cells around said active cell using the radio-wave state monitoring method according to any one of Claims 1 through 8.

18. A cell reselection device for performing cell reselection of an active cell in a cell layout including a plurality of cells (A-G), in which a mobile wireless device (12) is present, by monitoring the radio-wave state of cells around said active cell, wherein monitoring of the radio-wave state is performed for the cells around said active cell using the radio-wave state monitoring device (10) according to any one of Claims 9 through 16.

19. A mobile wireless device (12) including a cell reselection unit necessary for wireless communication with a base station (30) within a desired one of a plurality of cells (A-G), each of which is a component of a mobile wireless system, wherein said cell reselection unit comprises the cell reselection device according to Claim 18.
